# FASCICULE DE BREVET EUROPEEN

(11) **EP 3 801 371 B1**
(45) Date de publication et mention de la délivrance du brevet: **06.07.2022**
(21) Numéro de dépôt: 19736495.3
(22) Date de dépôt: 22.05.2019
(51) Int. Cl.: A61C 19/02, A61C 7/04

(54) **DISPOSITIF DE STOCKAGE D'UNE PRÉCELLE D'ORTHODONTIE**
VORRICHTUNG ZUR AUFBEWAHRUNG VON ORTHODONTISCHEN ZANGEN
DEVICE FOR STORING ORTHODONTIC PLIERS

(30) Priorité: 24.05.2018 FR 1870599
(43) Date de publication de la demande: 14.04.2021
(73) Titulaire: Damay, François, 62200 Boulogne sur Mer (FR)
(72) Inventeur: Damay, François, 62200 Boulogne sur Mer (FR)
(74) Mandataire: Ipside
(86) Numéro de dépôt international: PCT/IB2019/054220
(87) Numéro de publication internationale: WO 2019/224734

(56) Documents cités:
- CN-Y- 2 275 433
- US-A- 5 810 582
- US-A1- 2007 295 620

## Description

La présente invention concerne un dispositif de stockage d'une précelle d'orthodontie.

La pose d'un appareil orthodontique du type « multi bagues » ou « multi attaches » nécessite de coller sur la surface de certaines dents, des plots orthodontiques. Ces plots sont ensuite reliés par un arc métallique qui permet, du fait des contraintes mécaniques qu'il exerce, de modifier le placement relatif des dents.

La pose est longue car il faut disposer chaque plot sur une précelle, encoller le plot et enfin le coller sur la dent en le manipulant à l'aide de la précelle. La colle étant une composition photo polymérisable, la pose du plot sur la dent doit être immédiate ; le praticien doit donc travailler avec une assistante qui lui prépare les plots disposés sur les précelles au fur et à mesure.

Le document US 5 810 582 B1 décrit un coffret de stockage de précelles d'orthodontie qui permet de stocker les plots encollés disposés sur les précelles.

Le dispositif décrit dans ce document comporte un coffret en matériau opaque à la lumière qui comporte plusieurs logements verticaux s'ouvrant chacun au niveau d'une ouverture d'insertion. L'ouverture d'insertion comporte un méplat annulaire.

La précelle présente une extrémité de préhension et une extrémité de montage, laquelle permet le maintien du plot préalablement encollé. Un capuchon de silicone est emmanché sur l'extrémité de préhension de la précelle. Ce capuchon comporte une butée annulaire qui vient en appui sur le méplat annulaire de l'ouverture d'insertion, permettant ainsi de maintenir la précelle suspendue dans le logement, à l'abri de la lumière ambiante, le plot préalablement encollé ne touchant pas le fond du logement.

Ce dispositif présente plusieurs inconvénients. L'insertion de l'extrémité de la précelle portant le plot préalablement encollé n'est pas aisée, il faut en effet, faire attention à ne pas cogner le plot contre les bords de l'ouverture d'insertion. Ceci est rédhibitoire dans le cas d'une précelle adaptée pour la pose du plot sur une molaire et qui comporte donc une extrémité courbe, déportée latéralement par rapport à l'extrémité de préhension.

La précelle doit, après usage être stérilisée. Il faut donc, idéalement, retirer le capuchon et stériliser la précelle et le capuchon. Avant utilisation, il faut remonter le capuchon sur la précelle, de manière séparée.

Si un plot tombe dans le dispositif, il faut retourner le coffret et le secouer pour en récupérer le plot ou ouvrir une trappe à glissière.

Un but de la présente invention est de proposer un dispositif de stockage d'au moins une précelle d'orthodontie qui remédie à l'un au moins des inconvénients liés au dispositif de l'art antérieur.

### Brève description de l'invention

La présente invention concerne un dispositif permettant le stockage d'au moins une précelle d'orthodontie, ledit dispositif étant du type comprenant un coffret, en matériau opaque à la lumière, ledit coffret comportant au moins un logement de stockage apte à recevoir une précelle, ledit logement de stockage débouchant à la surface dudit coffret au niveau d'une ouverture d'insertion, ledit logement de stockage comprenant des moyens de maintien d'une précelle d'orthodontie.

Selon l'invention, de manière caractéristique, ledit logement de stockage comporte une surface interne et ledit coffret comporte une trappe, laquelle est montée mobile en rotation entre une position de fermeture, dans laquelle ladite trappe coopère avec ladite surface interne dudit logement de stockage pour former ladite ouverture d'insertion et ledit logement de stockage, et une position d'ouverture dans laquelle ladite trappe est éloignée de ladite surface interne dudit logement de stockage et permet l'accès à ce dernier ; lesdits moyens de maintien comportent un rétrécissement formé dans ledit logement de stockage ou au niveau de ladite ouverture d'insertion, par la coopération de ladite surface interne dudit logement de stockage et de ladite trappe, dans ladite position de fermeture de cette dernière.

Lorsque le dispositif comporte plusieurs logements de stockage, ils sont avantageusement séparés les uns des autres par des parois latérales opaques ; ainsi, lorsque la trappe d'un des logements est ouverte, la lumière ne pénètre pas dans les logements adjacents.

La trappe permet de facilement accéder à l'intérieur du coffret et de retirer un plot qui serait tombé à l'intérieur de ce dernier, sans avoir à secouer le coffret. Les autres précelles peuvent ainsi rester dans le coffret sans dommages.

La trappe permet d'insérer facilement la précelle sur laquelle est monté le plot encollé dans le logement de stockage. L'utilisateur n'a plus à craindre de cogner le plot au niveau du bord de l'ouverture d'insertion. La trappe permet d'insérer latéralement la précelle dans le logement de stockage. Le rétrécissement permet de maintenir la précelle suspendue verticalement dans le logement de stockage sans que le plot ne touche le fond de ce logement. La coopération entre le rétrécissement et la restriction de la précelle ou sa butée permet, d'une part ce maintien en suspension de la précelle et d'autre part empêche la lumière de passer vers le fond du logement de stockage, au-delà du rétrécissement ; le rétrécissement qui est le seul passage de la lumière pénétrant par l'ouverture d'insertion est en effet bouché par la précelle.

Le dispositif de l'invention permet de gagner du temps en permettant le stockage des plots préalablement encollés ; le praticien ou l'assistant(e) peuvent préparer le pré encollage des plots à un moment opportun de la journée afin d'optimiser l'exercice du cabinet, puis s'en servir pour la pose de l'appareil, sans l'aide d'un(e) assistant(e) ou d'une tierce personne. De plus, chaque précelle ayant son propre logement de stockage, on évite toute contamination lors de la pose. Le dispositif de l'invention permet donc un stockage hygiénique des plots montés sur les précelles.

Selon un mode de réalisation particulier, le coffret présente une première surface d'appui qui permet de le poser sur une surface sensiblement horizontale en sorte que ledit logement de stockage soit vertical, ladite ouverture d'insertion étant disposée à l'opposé de ladite première surface d'appui. Dans cette position, il est facile de retirer les précelles et de les insérer dans le coffret du fait de la présence de la trappe.

La trappe peut être disposée dans la position ouverte ou dans la position fermée et demeurée dans l'une et l'autre de ces positions, par frictions, notamment ; elle peut également être équipée de moyens de rappel qui permettent de la ramener de sa position ouverte à sa position fermée.

Avantageusement, ledit coffret peut comporter une deuxième surface d'appui qui permet de poser ledit coffret sur une surface sensiblement horizontale en sorte que ledit logement de stockage soit sensiblement horizontal, la trappe étant disposée à l'opposé de ladite deuxième surface d'appui. Le coffret peut ainsi être disposé horizontalement ou verticalement. La position horizontale peut faciliter l'insertion des précelles, la position verticale peut être plus adaptée au stockage de ces dernières (elles sont suspendues, le plot encollé à l'abri de la lumière) et à leur utilisation par le praticien.

Le dispositif peut également, selon une variante qui peut être combinée à l'un quelconque des modes de réalisation de l'invention, comporter une plaque support apte à maintenir le coffret dans sa position verticale. Selon un mode de réalisation particulier de la trappe qui peut être combiné à l'un quelconque des modes de réalisation précités, ladite trappe comporte une surface interne sur laquelle est ménagée une première protubérance, ladite première protubérance formant ledit rétrécissement dans ladite position de fermeture de ladite trappe. On forme ainsi facilement le rétrécissement.

Cette première protubérance peut présenter une section transversale sensiblement triangulaire, le sommet libre formant ledit rétrécissement.

Selon un autre mode de réalisation qui peut être combiné à l'un quelconque des modes de réalisation précités, ladite paroi interne dudit logement de stockage comporte une deuxième protubérance qui coopère avec ladite première protubérance pour former ledit rétrécissement, ladite deuxième protubérance ayant éventuellement sensiblement la même forme que ladite première protubérance.

Avantageusement, ledit rétrécissement est formé dans ledit logement de stockage, en amont de ladite ouverture d'insertion et ledit logement de stockage présente entre ledit rétrécissement et ladite ouverture d'insertion, une portion dont la section se rétrécit jusqu'à ladite ouverture d'insertion. Avantageusement, dans tous les modes de réalisation précités, ladite surface interne dudit logement et/ou ladite surface interne de ladite trappe présente(nt) une forme adaptée pour venir partiellement au contact d'une précelle disposée sur ladite surface interne de ladite trappe, sur ladite surface interne dudit logement de stockage ou dans ledit logement de stockage, ladite trappe étant en position fermée et ledit contact est réalisé au niveau dudit rétrécissement et en amont dudit rétrécissement, dans la direction de ladite ouverture d'insertion. On augmente ainsi la zone de contact entre la précelle logée dans le logement de stockage et la paroi du logement ; il en résulte que l'occultation à la lumière de la partie du logement située après le rétrécissement est optimale.

Le ledit logement de stockage peut comporter, en outre, des moyens occultants permettant d'éviter le passage de la lumière au niveau de ladite ouverture d'insertion. Ces moyens occultants sont utiles lorsque l'ouverture d'insertion n'est pas ajustée à la taille ou la forme de la précelle et/ou lorsque le rétrécissement n'est pas le seul endroit de passage de la lumière filtrant à travers l'ouverture d'insertion.

Ces moyens occultants ne sont pas limités selon l'invention. Ils peuvent, par exemple, comporter un volet apte à coopérer avec ladite surface interne dudit logement de stockage pour obturer au moins partiellement ladite ouverture d'insertion. Ce volet peut être disposé dans le logement de stockage, sous l'ouverture d'insertion, notamment lorsque cette dernière débouche également dans le logement par un autre endroit que le rétrécissement. Ce volet est particulièrement intéressant lorsque le logement de stockage est large pour permettre le stockage d'une précelle à extrémité courbe. La présence de ce volet permet de ménager une ouverture d'insertion sur toute la largeur du logement ; le volet vient ensuite boucher et occulter la portion de l'ouverture d'insertion qui n'est pas déjà bouché par la précelle disposée dans le logement de stockage.

Le dispositif de l'invention peut également comporter, en outre, une précelle d'orthodontie choisie parmi les précelles comportant deux lames croisées formant une restriction et une extrémité de préhension, les précelles présentant un corps sensiblement tubulaire comportant une extrémité de préhension et butée en creux ou en relief, lesdites précelles précitées présentant éventuellement une extrémité courbe et ladite précelle étant éventuellement logée dans ledit logement de stockage.

Dans tous les cas, la précelle comporte une portion située au-delà de la restriction ou de la butée (incluant l'extrémité de montage) qui est plus mince ou de même section que l'extrémité de préhension.

Le coffret peut être formé d'une pièce ou de module assemblés, comme exposé dans la description qui suit.

La présente invention, ses caractéristiques et les différents avantages qu'elle procure apparaitront mieux à la lecture de la description qui suit d'un mode de réalisation de la présente invention et de trois variantes de réalisation du module de base servant à la réalisation de ce mode de réalisation, présentés à titre d'exemples non limitatifs et qui fait références aux dessins annexés sur lesquels :
- les Fig. 1a à 1c représentent des vues de face et de profil de trois types de précelles déjà connues et couramment utilisées en orthodontie ;
- la Fig. 2 représente une vue partielle en perspective d'un mode de réalisation de l'invention, le coffret étant vertical ;
- la Fig. 3 représente une vue en coupe transversale d'une première variante du module de base équipant le mode de réalisation de la Fig. 2, dans laquelle est logée une précelle d'orthodontie ;
- la Fig. 4 représente une vue partielle en coupe transversale d'un module de base selon une deuxième variante ; et
- la Fig. 5 représente une vue en perspective de côté d'une coupe longitudinale d'une variante de réalisation du module du mode de réalisation de la Fig. 2.

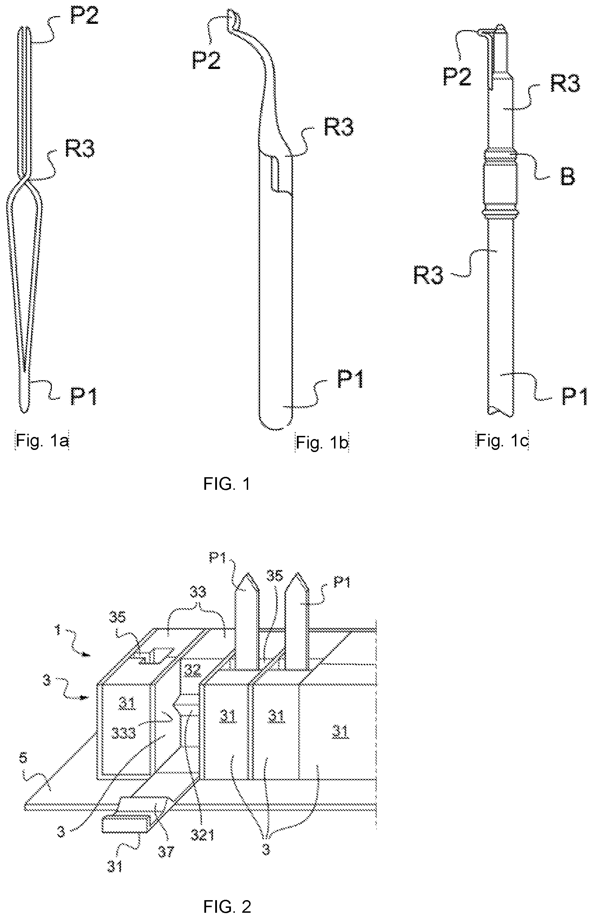

Les précelles sont des instruments qui permettent de saisir, maintenir et poser les plots orthodontiques. Les trois types de précelles utilisés sont représentés sur les Fig. 1a à 1c.

La Fig. 1a représente une précelle dite auto serrante. Cette précelle comporte une extrémité de préhension P1 et une extrémité P2 formant pince qui permet le maintien d'un plot orthodontique (non représenté). Cette précelle est formée de deux lames qui se croisent et forment une restriction R3, c'est-à-dire une zone où la largeur de la précelle est minimale. En appuyant sur les deux lames pour les rapprocher au niveau de l'extrémité de préhension P1, on écarte les deux lames l'une de l'autre, au niveau de l'extrémité P2, ce qui permet de relâcher le plot. Sans pression sur les lames, le plot est maintenu au niveau de l'extrémité P2.

La Fig. 1b représente une vue de face d'une précelle similaire à celle de la Fig. 1a mais qui comporte une extrémité P2 qui est déportée latéralement par rapport à l'extrémité de préhension P1. La précelle comporte donc une partie courbe au niveau de son extrémité P2. Cette précelle sert à la pose des plots sur les molaires.

La Fig. 1c représente une précelle qui comporte un corps sensiblement cylindrique, lequel comporte une portion en relief qui forme une butée B ; dans ce cas, on considère que la précelle comporte une restriction R3 (diminution du diamètre du corps) en amont et en aval de la butée B. La butée est mobile en translation le long du corps de la précelle et permet d'actionner l'extrémité en forme de pince qui maintien le plot.

En référence à la Fig. 2, selon un mode de réalisation particulier, le coffret 1 est formé par l'assemblage de modules 3 comportant chacun un logement de stockage. Le coffret et les modules qui le composent sont en matière opaque à la lumière, par exemple, en plastique noir. Les modules 3 comportent chacun 4 parois latérales, une paroi de fond, une trappe 31 et une face supérieure 33 dans laquelle est ménagée l'ouverture d'insertion 35. La Fig. 2 représente partiellement le dispositif de l'invention. Le coffret 1 comporte également des modules 3 qui sont adaptés pour recevoir des précelles pour la pose de plot sur les molaires (voir le module le plus à gauche sur la Fig. 2) et des modules 3 adaptés à des précelles droites. Les modules 3 sont fixés les uns aux autres de manière à former un coffret 1 dont la face avant comporte les trappes 31 et dont la face arrière (non visible sur la Fig. 2) est plane. Sur la Fig. 2, le coffret est monté sur une plaque support 5 dans laquelle il s'emboîte et qui permet de le maintenir à la verticale, les ouvertures d'insertion 35 dirigées vers le haut. Le fond du coffret 1 forme donc la première surface de support tandis que la face arrière du coffret 1, laquelle est opposée à la face comportant les trappes 31, forme la deuxième surface de support. Le coffret 1 peut donc être posé à plat, les trappes 31 s'étendant horizontalement dans leur position fermée et tournées vers le haut. La plaque support 5 est optionnelle et le dispositif de l'invention peut ne comprendre que le coffret. Comme représenté sur la Fig. 2, la trappe 31 comporte une protubérance 37 ménagée sur sa face qui vient en regard avec la face interne du corps 32 du module 3, pour former le logement de stockage, quand la trappe 31 est fermée. On constate que lorsque la trappe 31 est fermée, l'extrémité de préhension P1 des précelles dépasse verticalement du coffret. Le corps 32 du module 3 comporte en regard de la protubérance 37, une protubérance identique 321 qui permet de suspendre, lorsque la trappe 31 est fermée, la précelle P, au niveau de la zone de restriction R3 de cette dernière.

Comme représenté sur la Fig. 2, chaque module 3 comporte des parois latérales 333 qui l'isolent des deux autres modules qui sont adjacents. Ces parois 333 sont opaques à la lumière et permettent de ne pas laisser la lumière pénétrer dans les autres modules, lorsque la trappe 31 d'un module est ouverte. Les parois latérales 333 peuvent être moulées lors du processus de fabrication du module.

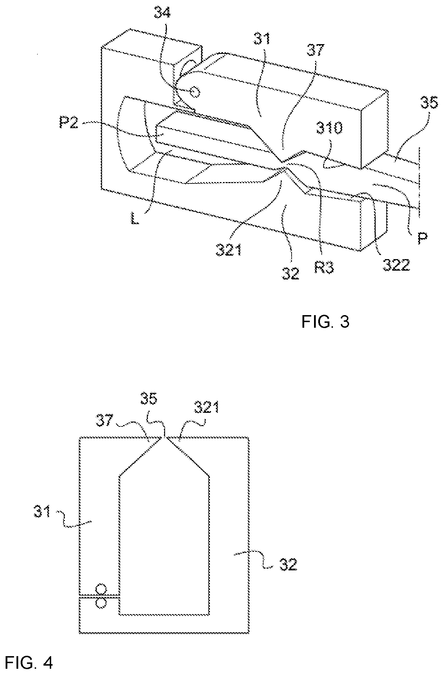

Le module 3, adapté à recevoir une précelle droite selon le premier mode de réalisation précité va maintenant être décrit en référence à la Fig. 3. Sur la Fig. 3, le module 3 est représenté à l'horizontale, la trappe 31 étant disposée vers le haut. Le module 3 comporte un corps 32 qui forme la paroi arrière du logement de stockage, sa paroi de fond et une partie de sa paroi avant. Les parois latérales 333 ne sont pas représentées par souci de simplification. La trappe 31 est montée à rotation sur le corps 32 de manière à former la paroi avant du module, lorsqu'elle est rabattue vers le module 3, en position fermée. Une charnière 34, pouvant être une charnière à friction, par exemple, permet de faire basculer manuellement la trappe 31 de sa position ouverte dans laquelle elle est éloignée de la face interne du module 3 et permet l'accès au logement de stockage au niveau de la face avant du coffret, à sa position fermée dans laquelle elle forme la face avant du logement de stockage ; ce dernier n'est alors plus ouvert qu'au niveau de l'ouverture 35 formée par l'épaisseur du corps 32 et celle de la trappe 31. Sur la Fig. 3, une précelle P du type de celle représentée sur la Fig. 1a est disposée entre la surface interne de la trappe 31 et la surface interne du corps du logement 32. Le corps 32 comporte une protubérance 321, de section transversale sensiblement triangulaire, symétrique à la protubérance 37 et qui vient en regard de cette dernière. La protubérance 37 est située sur la face interne de la trappe 31. Lorsque la trappe 31 est en position fermée, la restriction R3 de la précelle P est disposée entre les sommets se faisant face des deux protubérances 37 et 321. Le logement de stockage s'élargi en amont du rétrécissement, formant la cavité L, de façon à limiter les risques de contact avec le plot disposé sur la précelle. Lorsque le module 3 est disposé verticalement, la précelle P est suspendue dans le logement de stockage, son extrémité de préhension P1 dépassant du module 3 fermé, son extrémité P2 comportant le plot encollé étant située dans la cavité L du logement ; cette cavité étant disposée vers le fond du logement, en arrière des protubérances 321 et 37. Dans le mode de réalisation représenté sur la [Fig. 3], les surfaces de contact 310 et 322 respectivement du corps 32 et de la trappe 31, viennent en contact avec la surface de la précelle P assurant ainsi la parfaite occultation de la cavité L du logement de stockage. Ainsi, entre le rétrécissement formé par les sommets des protubérances 37 et 321 et l'ouverture d'insertion 35, le logement de stockage présente une section dont la surface n'est pas constante : la section de cette portion du logement de stockage s'élargit depuis l'ouverture d'insertion 35 jusqu'à une position donnée puis se rétrécit pour former le rétrécissement. Cette configuration particulière de la portion de stockage située entre le rétrécissement et l'ouverture d'insertion permet d'écarter la trappe 31 de la surface interne du logement, sous l'effet du déplacement vertical d'une précelle logée dans le logement (le logement étant également disposé verticalement), d'une distance suffisante pour permettre le passage de toute la longueur de la précelle, sans risque de contact avec l'extrémité de la précelle comportant le plot. Elle permet également d'éviter le passage de la lumière vers l'intérieur du logement en épousant la surface de la précelle, comme expliqué ci-dessus.

En référence à la Fig. 3, La surface de contact 310 correspond à la portion de la surface interne de la trappe 31, située entre l'extrémité libre de la trappe 31 et la protubérance 37 ; la surface de contact 322 est située sur la surface interne du corps 32 du logement de stockage, entre l'ouverture d'insertion 35 et la protubérance 321. La surface interne du corps 32 du module 3 est symétrique à celle de la face interne de la trappe 31, par rapport à un plan passant par le milieu du logement de stockage et parallèle à la trappe 31, en position fermée.

En référence à la Fig. 4, selon une variante de réalisation du module 3 représenté sur les Fig. 2 et Fig. 3, les protubérances 37 et 321 forment l'ouverture 35. Cette dernière est de dimension adaptée pour coopérer avec la largeur de la précelle P, au niveau de sa zone de restriction R3. La précelle P est ainsi maintenue suspendue dans le logement de stockage, sa zone de restriction R3 étant maintenue pincée entre la trappe 31 et la protubérance 321 du corps 32 du logement de stockage. Dans ce mode de réalisation, la largeur de l'ouverture 35 correspond à l'épaisseur de la zone de restriction R3 tandis que sa longueur (dans le sens de la longueur du coffret 1 tel que représenté sur la Fig. 2) correspond à la largeur de la précelle P.

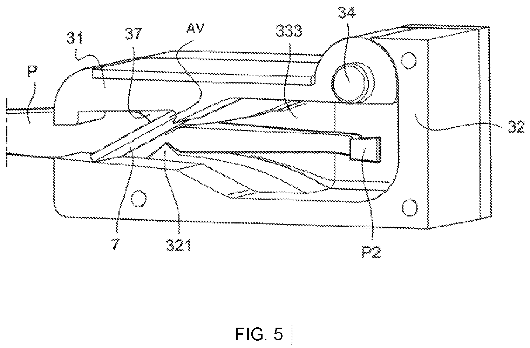

En référence à la Fig. 5, une variante de réalisation du module 3 (une seule paroi latérale est représentée) représenté sur la Fig. 2 va maintenant être décrit. Cette variante de réalisation est adaptée pour le stockage d'une précelle à bout courbe pour la pose de plots sur les molaires, comme, par exemple, représentée sur la [Fig. 1b] Les éléments en commun avec le premier mode de réalisation sont référencés à l'identique. En référence à la Fig. 5, la trappe 31 est en position fermée, à l'horizontale, le coffret 1 étant disposé horizontalement , l'ouverture 35 orientée latéralement. La précelle P, est en appui contre la surface de contact 310 de la trappe 31 et contre une face de la protubérance 37. La protubérance 37 s'étend sur une portion de la largeur de la trappe 31. La protubérance 321 du corps 32 s'étend en regard de la protubérance 37. Selon une variante non représentée, la protubérance 321 s'étend sur toute la largeur du logement de stockage. La trappe 31 en position horizontale et la surface du corps 32, dont la protubérance 321, peuvent servir de support à une précelle P. Un volet 7 est monté à côté de la protubérance 37, sur la face interne de la trappe 31, selon la largeur de cette dernière. Ce volet 7 est monté mobile en rotation autour d'un axe AV, horizontal sur la Fig. 5 et traversant la protubérance 37. Le volet 7 peut librement pivoter autour de son axe, lequel est parallèle à la largeur de la trappe 31. En position horizontale, l'extrémité du volet vient en appui contre la face interne du corps 32 du logement de stockage, bouchant ainsi la portion de l'ouverture 35 qui n'est obturée par la précelle P ; l'intérieur du logement de stockage est ainsi à l'abri de la lumière. Lorsque le coffret est disposé verticalement, comme représenté sur la Fig. 2, du fait de sa libre rotation, le volet 7, sous l'effet de son poids, reste en contact avec la paroi interne du corps 32 formant le logement, et continue donc de protéger l'intérieur du logement de stockage de la lumière. Lors de l'ouverture de la trappe 31, pour sortir la précelle P, la trappe 31 étant éloignée du corps 32 du logement de stockage, le volet 7 est aussi écarté de la paroi interne du corps 32 et donc ne gêne en rien l'extraction de la précelle P ; il ne risque donc pas de cogner le plot lors du passage de la précelle P à travers l'ouverture 35. Ce volet 7 évite de ménager une ouverture 35 avec des dimensions précises adaptées à chaque précelle et permet de plus le stockage de précelles ayant une extrémité courbe.

En référence à la Fig. 5, on constate que l'extrémité P2 de la précelle P est bien située au niveau du volet 7, en dessous de ce dernier et donc parfaitement protégée de la lumière, quelle que soit la position du coffret.

L'utilisation du coffret 1 va maintenant être expliquée en référence aux Fig. 2 à 5. Le plot encollé est monté à l'extrémité P2 de la précelle P. L'utilisateur bascule le coffret 1 de manière que la trappe 31 soit située sur la face du dessus du coffret 1, ce dernier étant à l'horizontal, en appui sur sa deuxième surface d'appui. L'utilisateur ouvre la trappe 31 d'un module 3 adapté à la précelle P et positionne la précelle P sur la protubérance 321 et sur la surface 322 du corps 32 du module 3. Ces dernières sont exactement les mêmes que la protubérance 37 et la surface 310 et peuvent donc servir de support à la précelle P. Dans cette position, la précelle est stable et son extrémité P2 qui porte le plot ne touche pas le fond du logement de stockage. L'utilisateur referme ensuite la trappe 31 sur le corps 32 du module 3. La précelle P, à l'horizontale, vient en contact avec la surface interne de la trappe 31 au niveau des protubérances 37 et 321. La lumière ne peut donc pas pénétrer dans la cavité L du logement de stockage du fait du contact entre la précelle et les parois de la trappe 31 et du corps 32 du module 3. Le plot encollé est donc à l'abri de la lumière. L'utilisateur procède de même pour chaque précelle. Pour les précelles à extrémité courbe, il utilise les modules 3 du coffret qui correspondent à la seconde variante de réalisation. Lorsque la trappe 31 est fermée, le coffret à l'horizontal, le volet mobile 7 vient obturer la portion d'ouverture 35 non obturée par la précelle elle-même. Le plot est donc également à l'abri de la lumière.

Lorsque toutes les précelles sont disposées dans le coffret 1, à l'abri de la lumière, l'utilisateur redresse le coffret 1 et le pose sur la base 5. Les trappes 31 sont verticales et les extrémités de préhension P1 des précelles P sortent du coffret 1, vers le haut, comme représenté sur la Fig. 2. Les précelles P sont en appui contre les protubérances 37 et 321 qui les maintiennent suspendues dans le logement de stockage. Le contact entre la précelle et les parois 310 et 322, en amont des protubérances 37 et 321 empêche le passage de la lumière dans la cavité L du logement de stockage qui abrite le plot encollé. Le contact de la précelle P avec les protubérances 37 et 321 renforce également cette occultation. La précelle elle-même, devenant plus épaisse au-delà des protubérances 37 et 321 assure également l'occultation du logement de stockage en bouchant l'éventuel jeu entre les protubérances 7, 321 et la zone de restriction R3 de la précelle P. Le volet mobile 7 prend l'inclinaison nécessaire pour obturer la portion de l'ouverture 35 qui n'est pas bouchée par la précelle P, dans le cas d'un module adapté à une précelle à bout courbe. Le volet mobile 7 peut être vertical ou non et vient en appui contre une butée ménagée sur la surface interne du corps 32, réalisant ainsi l'occultation. Les plots sont donc tous à l'abri de la lumière dans le coffret 1. La pose des plots peut être décalée dans le temps. Lors de la pose des plots, le praticien utilise les précelles une à une, les tenant par leur extrémité de préhension P1 d'une main. Le retrait vertical de la précelle entraîne l'ouverture de la trappe 31 sous la poussée exercée par la précelle déplacée verticalement. La portion du logement de stockage située entre le rétrécissement et l'ouverture d'insertion 35 se rétrécissant en direction de l'ouverture d'insertion 35, le passage de la précelle écarte la trappe 31 de la paroi interne du logement et agrandit l'ouverture d'insertion 35, permettant ainsi le passage de toute la longueur de la précelle ; celle-ci est, de plus, plus mince vers son extrémité apte à porter le plot préalablement encollé. Lorsque la trappe comporte un volet 7, celui-ci s'écarte en même temps que la trappe 31 et ne gêne pas le passage de l'extrémité courbée de la précelle. La pose du plot est ainsi facile et rapide. On a pu constater que les précelles portant un plot encollé peuvent rester plusieurs dizaines d'heures dans le coffret 1 sans que l'on observe une modification de la colle.

La présente invention ne se limite pas à un coffret formé de l'assemblage de module 3. Le coffret peut également être réalisé en une seule pièce. Les logements sont tous séparés les uns des autres par des cloisons de façon à éviter le passage de la lumière lors de l'ouverture d'une trappe 31 quelconque. Les modules sont en revanche faciles à fabriquer. Ils peuvent être obtenus par impression 3D, notamment.

## Revendications

1. Dispositif permettant le stockage d'au moins une précelle d'orthodontie (P), ledit dispositif étant du type comprenant un coffret (1), en matériau opaque à la lumière, ledit coffret (1) comportant au moins un logement de stockage apte à recevoir une précelle (P), ledit logement de stockage débouchant à la surface dudit coffret (1) au niveau d'une ouverture d'insertion (35), ledit logement de stockage comprenant des moyens de maintien d'une précelle d'orthodontie, ledit logement de stockage comportant une surface interne, **caractérisé en ce que** ledit coffret (1) comporte une trappe (31), laquelle est montée mobile en rotation entre une position de fermeture, dans laquelle ladite trappe (31) coopère avec ladite surface interne dudit logement de stockage pour former ladite ouverture d'insertion (35) et ledit logement de stockage, et une position d'ouverture dans laquelle ladite trappe (31) est éloignée de ladite surface interne dudit logement de stockage et permet l'accès à ce dernier et **en ce que** lesdits moyens de maintien comportent un rétrécissement formé dans ledit logement de stockage ou au niveau de ladite ouverture d'insertion (35), par la coopération de ladite surface interne dudit logement de stockage et de ladite trappe (31), dans ladite position de fermeture de cette dernière.

2. Dispositif selon la revendication 1, **caractérisé en ce que** ledit coffret (1) présente une première surface d'appui qui permet de le poser sur une surface sensiblement horizontale en sorte que ledit logement de stockage soit vertical, ladite ouverture d'insertion (35) étant disposée à l'opposé de ladite première surface d'appui et une deuxième surface d'appui qui permet de poser ledit coffret (1) sur une surface sensiblement horizontale en sorte que ledit logement de stockage soit sensiblement horizontal, la trappe (31) étant disposée à l'opposé de ladite deuxième surface d'appui.

3. Dispositif selon l'une quelconque des revendications précédentes, **caractérisé en ce que** ladite trappe (31) comporte une surface interne sur laquelle est ménagée une première protubérance (37), ladite première protubérance formant ledit rétrécissement dans ladite position de fermeture de ladite trappe (31).

4. Dispositif selon la revendication 3, **caractérisé en ce que** ladite première protubérance (37) présente une section transversale sensiblement triangulaire, le sommet libre dudit triangle formant ledit rétrécissement.

5. Dispositif selon l'une quelconque des revendications 3 et 4, **caractérisé en ce que** ladite paroi interne dudit logement de stockage comporte une deuxième protubérance (321) qui coopère avec ladite première protubérance (37) pour former ledit rétrécissement, ladite deuxième protubérance (321) ayant éventuellement sensiblement la même forme que ladite première protubérance (37).

6. Dispositif selon l'une quelconque des revendications précédentes, **caractérisé en ce que** ledit rétrécissement est formé dans ledit logement de stockage et **en ce que** ledit logement de stockage présente entre ledit rétrécissement et ladite ouverture d'insertion (35), une portion dont la section se rétrécit jusqu'à ladite ouverture d'insertion (35).

7. Dispositif selon l'une quelconque des revendications précédentes, **caractérisé en ce que** ladite surface interne dudit logement et/ou la surface interne de ladite trappe présente(nt) une forme adaptée pour venir partiellement au contact d'une précelle disposée sur ladite surface interne de ladite trappe (31), sur ladite surface interne dudit logement de stockage ou dans ledit logement de stockage, ladite trappe (31) étant en position fermée et **en ce que** ledit contact est réalisé au niveau dudit rétrécissement et en amont de ce dernier, dans la direction de ladite ouverture d'insertion (35).

8. Dispositif selon l'une quelconque des revendications précédentes, **caractérisé en ce que** ledit logement de stockage comporte, en outre, des moyens occultants (7) permettant d'éviter le passage de la lumière au niveau de ladite ouverture d'insertion (35).

9. Dispositif selon la revendication 8, **caractérisé en ce que** lesdits moyens occultants comportent au moins un volet (7) apte à coopérer avec ladite surface interne dudit logement de stockage pour obturer au moins partiellement ladite ouverture d'insertion (35).

10. Dispositif selon l'une quelconque des revendications précédentes, **caractérisé en ce qu'**il comporte, en outre, une précelle d'orthodontie (P) choisie parmi les précelles comportant deux lames croisées formant une restriction (R3) et une extrémité de préhension (P2), les précelles présentant un corps sensiblement tubulaire comportant une extrémité de préhension (P2) et une butée (B) en creux ou en relief, lesdites précelles présentant éventuellement une extrémité courbe et ladite précelle étant logée dans ledit logement de stockage.

## Patentansprüche

1. Vorrichtung , die die Aufbewahrung mindestens einer orthodontischen Zange (P) ermöglicht, wobei die Vorrichtung in der Art ein Gehäuse (1) aus einem lichtundurchlässigen Werkstoff umfassend ist, wobei das Gehäuse (1) mindestens eine Aufbewahrungsaufnahme beinhaltet, die imstande ist, eine Zange (P) aufzunehmen, wobei die Aufbewahrungsaufnahme im Bereich einer Einführungsöffnung (35) in die Oberfläche des Gehäuses (1) mündet, wobei die Aufbewahrungsaufnahme Mittel zum Halten einer orthodontischen Zange umfasst, wobei die Aufbewahrungsaufnahme eine Innenoberfläche beinhaltet, **dadurch gekennzeichnet, dass** das Gehäuse (1) eine Klappe (31) beinhaltet, welche drehbeweglich zwischen einer Schließposition, in der die Klappe (31) mit der Innenoberfläche der Aufbewahrungsaufnahme zusammenwirkt, um die Einführungsöffnung (35) und die Aufbewahrungsaufnahme zu bilden, und einer Öffnungsposition, in der die Klappe (31) von der Innenoberfläche der Aufbewahrungsaufnahme entfernt ist, und den Zugang zu dieser letzteren ermöglicht, montiert ist, und dadurch, dass die Mittel zum Halten eine Verengung, die in der Aufbewahrungsaufnahme oder im Bereich der Einführungsöffnung (35) gebildet ist, durch das Zusammenwirken der Innenoberfläche der Aufbewahrungsaufnahme und der Klappe (31) in der Schließposition dieser letzteren beinhalten.

2. Vorrichtung nach Anspruch 1, **dadurch gekennzeichnet, dass** das Gehäuse (1) eine erste Anlegeoberfläche aufweist, die es ermöglicht, sie derart auf eine im Wesentlichen horizontale Oberfläche zu legen, dass die Aufbewahrungsaufnahme vertikal ist, wobei die Einführungsöffnung (35) gegenüber der ersten Anlegeoberfläche angeordnet ist, und eine zweite Anlageoberfläche, die es ermöglicht, das Gehäuse (1) derart auf eine im Wesentlichen horizontale Oberfläche zu legen, dass die Aufbewahrungsaufnahme im Wesentlichen horizontal ist, wobei die Klappe (31) gegenüber der zweiten Anlegeoberfläche angeordnet ist.

3. Vorrichtung nach einem der vorstehenden Ansprüche, **dadurch gekennzeichnet, dass** die Klappe (31) eine Innenoberfläche beinhaltet, auf der ein erster Vorsprung (37) ausgeführt ist, wobei der erste Vorsprung die Verengung in der Schließposition der Klappe (31) bildet.

4. Vorrichtung nach Anspruch 3, **dadurch gekennzeichnet, dass** der erste Vorsprung (37) einen im Wesentlichen dreieckigen Querschnitt aufweist, wobei die freie Spitze des Dreiecks die Verengung bildet.

5. Vorrichtung nach einem der Ansprüche 3 und 4, **dadurch gekennzeichnet, dass** die Innenwand der Aufbewahrungsaufnahme einen zweiten Vorsprung (321) beinhaltet, der mit dem ersten Vorsprung (37) zusammenwirkt, um die Verengung zu bilden, wobei der zweite Vorsprung (321) eventuell im Wesentlichen dieselbe Form wie der erste Vorsprung (37) aufweist.

6. Vorrichtung nach einem der vorstehenden Ansprüche, **dadurch gekennzeichnet, dass** die Verengung in der Aufbewahrungsaufnahme gebildet wird, und dadurch, dass die Aufbewahrungsaufnahme zwischen der Verengung und der Einführungsöffnung (35) einen Abschnitt aufweist, dessen Querschnitt sich bis zur Einführungsöffnung (35) verengt.

7. Vorrichtung nach einem der vorstehenden Ansprüche, **dadurch gekennzeichnet, dass** die Innenoberfläche der Aufnahme und/oder die Innenoberfläche der Klappe eine Form aufweist(-en), die angepasst ist, um teilweise in Kontakt mit einer Zange zu gelangen, die an der Innenoberfläche der Klappe (31), auf der Innenoberfläche der Aufbewahrungsaufnahme oder in der Aufbewahrungsaufnahme angeordnet ist, wobei die Klappe (31) in geschlossener Position ist und dadurch, dass der Kontakt um Bereich der Verengung und stromaufwärts dieser letzteren in der Richtung der Einführungsöffnung (35) hergestellt wird.

8. Vorrichtung nach einem der vorstehenden Ansprüche, **dadurch gekennzeichnet, dass** die Aufbewahrungsaufnahme weiter Verschleierungsmittel (7) beinhaltet, die es ermöglichen, den Durchlass des Lichtes im Bereich der Einführungsöffnung (35) zu vermeiden.

9. Vorrichtung nach Anspruch 8, **dadurch gekennzeichnet, dass** die Verschleierungsmittel mindestens eine Blende (7) beinhalten, die imstande ist, mit der Innenoberfläche der Aufbewahrungsaufnahme zusammenzuwirken, um die Einführungsöffnung (35) mindestens teilweise zu verschließen.

10. Vorrichtung nach einem der vorstehenden Ansprüche, **dadurch gekennzeichnet, dass** sie weiter eine orthodontischen Zange (P) beinhaltet, die aus den Zangen ausgewählt wird, die zwei gekreuzte Klingen beinhalten, die eine Eingrenzung (R3) und ein Greifende (P2) bilden, wobei die Zangen einen im Wesentlichen rohrförmigen Körper aufweisen, der ein Greifende (P2) und einen Anschlag (B) über Kreuz oder als Relief beinhaltet, wobei die Zangen eventuell ein gekrümmtes Ende aufweisen und die Zange in der Aufbewahrungsaufnahme aufgenommen ist.

## Claims

1. Device for storing at least one set of orthodontic pliers (P), said device being of the type comprising a case (1), consisting of a material which is impenetrable to light, said case (1) including at least one storage housing capable of receiving a set of pliers (P) , said storage housing opening out at the surface of said case (1) at an insertion opening (35), said storage housing comprising means for holding a set of orthodontic pliers, said storage housing including an inner surface, **characterised in that** said case (1) includes a flap (31), which is mounted such that it can move rotatably between a closing position, in which said flap (31) cooperates with said inner surface of said storage housing to form said insertion opening (35) and said storage housing, and an opening position in which said flap (31) is at a distance from said inner surface of said storage housing and makes it possible to access the latter and **in that** said holding means include a narrowing formed in said storage housing or at said insertion opening (35), by the cooperation of said inner surface of said storage housing and of said flap (31), in said closing position of the latter.

2. Device according to claim 1 , **characterised in that** said case (1) has a first bearing surface that makes it possible to place it on a substantially horizontal surface so that said storage housing is vertical, said insertion opening (35) being disposed opposite said first bearing surface and a second bearing surface that makes it possible to place said case (1) on a substantially horizontal surface so that said storage housing is substantially horizontal, the flap (31) being disposed opposite said second bearing surface.

3. Device according to any one of the preceding claims, **characterised in that** said flap (31) includes an inner surface on which is arranged a first protuberance (37), said first protuberance forming said narrowing in said closing position of said flap (31).

4. Device according to claim 3, **characterised in that** said first protuberance (37) has a substantially triangular transverse section, the free apex of said triangle forming said narrowing.

5. Device according to any one of claims 3 and 4, **characterised in that** said inner wall of said storage housing includes a second protuberance (321) that cooperates with said first protuberance (37) to form said narrowing, said second protuberance (321) optionally having substantially the same shape as said first protuberance (37).

6. Device according to any one of the preceding claims, **characterised in that** said narrowing is formed in said storage housing and **in that** said storage housing has between said narrowing and said insertion opening (35), a portion the section of which narrows up to said insertion opening (35).

7. Device according to any one of the preceding claims, **characterised in that** said inner surface of said housing and/or the inner surface of said flap has (have) a shape adapted to partially come into contact with a set of pliers disposed on said inner surface of said flap (31), on said inner surface of said storage housing or in said storage housing, said flap (31) being in closed position and **in that** said contact is performed at said narrowing and upstream of the latter, in the direction of said insertion opening (35).

8. Device according to any one of the preceding claims, **characterised in that** said storage housing further includes blocking means (7) making it possible to prevent the light from passing through at said insertion opening (35) .

9. Device according to claim 8, **characterised in that** said blocking means include at least one shutter (7) capable of cooperating with said inner surface of said storage housing to block at least partially said insertion opening (35).

10. Device according to any one of the preceding claims, **characterised in that** it further includes a set of orthodontic pliers (P) selected from the set of pliers including two crossed blades forming a restriction (R3) and a gripping end (P2), the set of pliers having a substantially tubular body including a gripping end (P2) and a recessed or raised abutment (B), said set of pliers optionally having a curved end and said set of pliers being fitted into said storage housing.
